# EUROPÄISCHE PATENTSCHRIFT

(11) **EP 1 628 051 B1**
(45) Veröffentlichungstag und Bekanntmachung des Hinweises auf die Patenterteilung: **09.09.2009**
(21) Anmeldenummer: 05010392.8
(22) Anmeldetag: 12.05.2005
(51) Int. Cl.: F16J 15/32

(54) **Dichtring**
Sealing Ring
Râcleur

(30) Priorität: 18.08.2004 DE 102004040105
(43) Veröffentlichungstag der Anmeldung: 22.02.2006
(73) Patentinhaber: Firma Carl Freudenberg, 69469 Weinheim (DE)
(72) Erfinder: Guillerme, Céline, 52200 Courcelles en Montagne (FR); Kammerer, Eric, 52200 Langres (FR)

(56) Entgegenhaltungen:
- EP-A- 1 350 995
- EP-B- 0 771 398
- DE-A1- 4 307 964
- DE-A1- 10 033 446
- DE-A1- 19 922 842
- DE-C1- 3 545 683
- US-A1- 2003 098 549

## Beschreibung

### Technisches Gebiet

Die Erfindung betrifft einen Dichtring, umfassend eine Dichtmanschette aus polymerem Werkstoff, die während der bestimmungsgemäßen Verwendung, im Längsschnitt betrachtet, im wesentlichen L-förmig ausgebildet ist, mit einem sich im wesentlichen in radialer Richtung erstreckenden Befestigungsbereich und einem sich im wesentlichen in axialer Richtung erstreckenden Dichtbereich, der die Oberfläche eines abzudichtenden Maschinenelements mit radialer Vorspannung dichtend umschließt, wobei der Dichtbereich auf der der Oberfläche zugewandten Seite zumindest eine Rückfördereinrichtung zur Förderung von abzudichtendem Medium in Richtung des abzudichtenden Raums aufweist, wobei die Rückfördereinrichtung durch zumindest eine sich in Richtung vom abzudichtenden Raum zur Umgebung spiralförmig erstreckende Rückfördernut gebildet ist.

Eine derartige Nut ist aus der DE 19922842A1 bekannt.

### Stand der Technik

Derartige Dichtringe sind aus der DE 100 33 446 A1 bekannt. Der vorbekannte Dichtring weist zur Rückförderung des abzudichtenden Mediums auf der der Welle zugewandten Seite der Dichtmanschette ein Gewinde auf, welches das abzudichtende Medium bei drehender Welle in den abzudichtenden Raum zurückfördert. Bei gesteigerten Betriebstemperaturen und einer verstärkten Additivierung von Schmiermitteln besteht die Gefahr einer Ölkohlebildung in der Rückfördereinrichtung, wodurch die Rückfördereinrichtung unwirksam wird.

### Darstellung der Erfindung

Der Erfindung liegt die Aufgabe zugrunde, den vorbekannten Dichtring derart weiterzuentwickeln, dass die Gefahr des Zusetzens der Rückfördereinrichtung vermindert werden kann.

Diese Aufgabe wird durch die Merkmale von Anspruch 1 gelöst. Auf vorteilhafte Ausgestaltungen nehmen die Unteransprüche Bezug.

Zur Lösung der Aufgabe vergrößert sich die Querschnittsfläche in Richtung der Umgebung. Es wurde festgestellt, dass die Gefahr des Zusetzens der Rückfördernut vom abzudichtenden Raum in Richtung der Umgebung zunimmt. Durch eine Zunahme der Querschnittfläche in der gleichen Richtung verringert sich die Rückförderkapazität und die Rückfördermenge. Daraus resultiert eine steilere Anströmung der Flanken der Rückfördernut, wodurch die Gefahr einer Ölkohlebildung vermindert wird.

Die Breite und/oder die Steigung der Rückfördernut kann sich bei zumindest einem Spiralgang vom abzudichtenden Raum in Richtung der Umgebung vergrößern. Dabei ist von Vorteil, dass die Dicke der Dichtmanschette konstant gehalten werden kann, da die größere Querschnittsfläche nicht durch eine zunehmende Nuttiefe erreicht wird. Die zunehmende Steigung der Rückfördernuten vom abzudichtenden Raum in Richtung der Umgebung der Dichtscheibe verringert in gleicher Richtung die Rückförderkapazität der Rückfördernuten. Dies ist auf die steilere Anströmung des Öles auf die Flanken der Rückfördernuten zurückzuführen. Allerdings nimmt auch die Ölmenge im Dichtspalt und damit die zurückzufördernde Ölmenge in Richtung der Umgebung ab.

Das Verhältnis von Querschnittsfläche der Rückfördernut auf der dem abzudichtenden Raum zugewandten Seite zur Querschnittsfläche auf der der Umgebung zugewandten Seite kann von 1:1,5 bis 1:4, vorzugsweise 1:3 betragen. Durch Untersuchungen hat sich gezeigt, dass bei diesen Verhältnissen die Gefahr der Ölkohlebildung besonders gut gemindert werden kann.

Das Verhältnis von Breite und/oder Steigung an der dem abzudichtenden Raum zugewandten Seite zu Breite und/oder Steigung auf der der Umgebung zugewandten Seite kann von 1:1,5 bis 1:2,5, vorzugsweise 1:2 betragen. Durch Untersuchungen hat sich gezeigt, dass bei diesen Verhältnissen die Gefahr der Ölkohlebildung besonders gut gemindert werden kann.

Die Rückfördernut kann eine sich vom abzudichtenden Raum entlang des Dichtbereichs in Richtung Umgebung verringernde Nuttiefe aufweisen. Mit der abnehmenden Nuttiefe kann auch die Dicke der Dichtmanschette abnehmen. Dadurch werden die Reibungsverluste und damit eine übermäßige Temperaturentwicklung insbesondere am freien Ende der Dichtmanschette vermindert. Die Nuttiefe kann sich bei jedem Spiralgang um mindestens 0,03 mm verringern.

Die Dichtmanschette kann mit ihrem freien Ende in Richtung der Umgebung vorgewölbt sein. Derartige Dichtmanschetten sind besonders einfach in den Fällen montierbar, bei denen die abzudichtende Welle bereits eingebaut ist.

An der Dichtmanschette kann auf der der Umgebung zugewandten Seite eine Schmutzlippe angeordnet sein. Dadurch wird die Dichtmanschette vor vorzeitigem Verschleiß durch eindringende Schmutzpartikel geschützt.

Die Rückfördernut kann auf der der Umgebung zugewandten Seite in eine konzentrisch innenumfangsseitig verlaufende Nut oder in eine konzentrisch innenumfangsseitig verlaufende Dichtleiste auslaufen. Dadurch ist die Rückfördernut in Richtung der Umgebung verschlossen und die Dichtmanschette weist neben der dynamischen auch eine statische Dichtheit auf.

Die Dichtmanschette kann aus einem PTFE-Compound bestehen. PTFE weist eine geringe Reibung auf und ist resistent gegenüber einer Vielzahl von Schmierstoffen.

Nach einer weiteren Lösung der Aufgabe ist der erfindungsgemäße Dichtring in einem Gehäuseverschlussdeckel integriert. Durch die Integration des Dichtrings in einen Gehäuseverschlussdeckel kann eine vormontierbare Einheit bereitgestellt werden.

### Kurzbeschreibung der Zeichnungen

Einige Ausführungsbeispiele des erfindungsgemäßen Dichtrings werden nachfolgend anhand der Figuren näher erläutert. Es zeigen, jeweils in schematischer Darstellung:
- Fig. 1: den erfindungsgemäßen Dichtring in montierter Darstellung;
- Fig. 2: einen Dichtring mit Schmutzlippe;
- Fig. 3: einen Dichtring mit abnehmender Nuttiefe;
- Fig. 4: einen erfindungsgemäßen Gehäuseverschlussdeckel.

### Ausführung der Erfindung

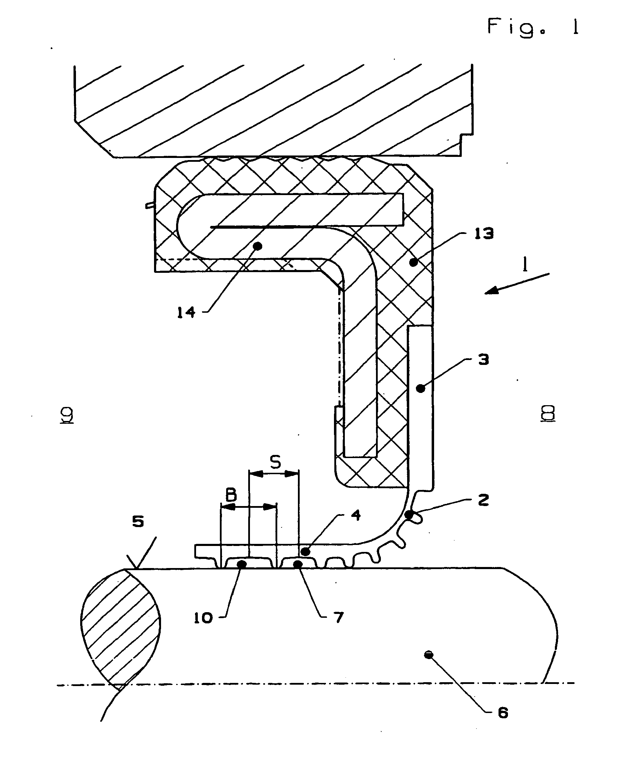

Figur 1 zeigt einen Dichtring 1, mit einer Dichtmanschette 2 aus polymerem Werkstoff, in dieser Ausführung aus PTFE. Die Dichtmanschette 2 ist in montiertem Zustand, während der bestimmungsgemäßen Verwendung, im wesentlichen L-förmig ausgebildet. Die Dichtmanschette 2 weist einen sich in radialer Richtung erstreckenden Befestigungsbereich 3 und einem sich in axialer Richtung erstreckenden Dichtbereich 4 auf. Mittels des Befestigungsbereichs 3 ist die Dichtmanschette 2 an einem Elastomer 13 befestigt, wobei das Elastomer 13 an einem Tragkörper 14 befestigt ist. Der Dichtbereich 4 umschließt die Oberfläche 5 des abzudichtenden Maschinenelements 6, in dieser Darstellung eine Welle, mit radialer Vorspannung dichtend. Der Dichtbereich 4 weist auf der der Oberfläche 5 zugewandten Seite eine Rückfördereinrichtung 7 zur Förderung von abzudichtendem Medium in Richtung des abzudichtenden Raums 8 auf, die durch eine sich in Richtung vom abzudichtenden Raum 8 zur Umgebung 9 spiralförmig erstreckende Rückfördernut 10 gebildet ist. Die Querschnittsfläche der Rückfördernut 10 vergrößert sich in Richtung der Umgebung 9. Die Vergrößerung der Querschnittsfläche erfolgt durch eine zunehmende Breite B und eine zunehmende Steigung S der Rückfördernut 10. Das Verhältnis von Breite B und/oder Steigung S auf der dem abzudichtenden Raum 8 zugewandten Seite zu Breite b und/oder Steigung S auf der der Umgebung 9 zugewandten Seite beträgt dabei 1:2 und das Verhältnis von Querschnittsfläche der Rückfördernut 10 auf der dem abzudichtenden Raum 8 zugewandten Seite zur Querschnittsfläche auf der der Umgebung 9 beträgt 1:3. Die Rückfördernut 10 läuft auf der der Umgebung 9 zugewandten Seite in eine konzentrisch innenumfangsseitig verlaufende Dichtleiste 17 aus. Die Dichtmanschette 2 ist in Richtung der Umgebung 9 vorgewölbt.

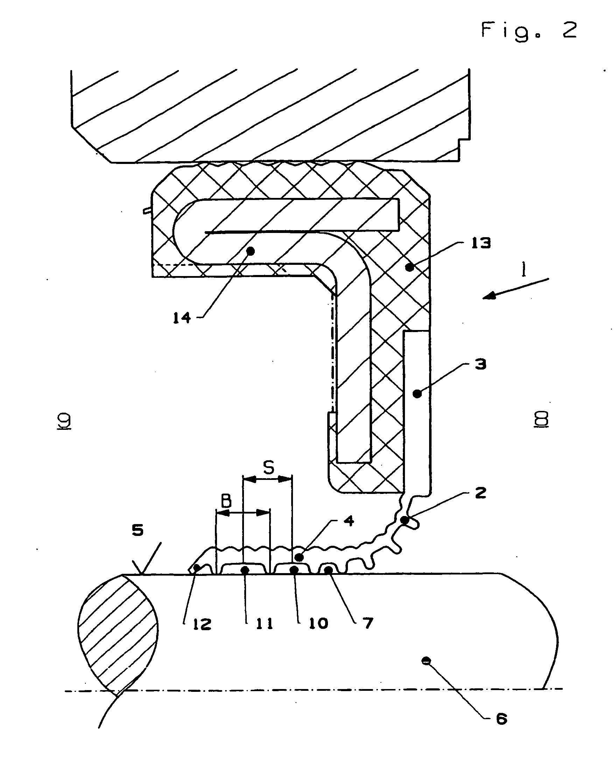

Figur 2 zeigt einen Dichtring 1 gemäß Figur 1, wobei die Dichtmanschette 2 ebenfalls in Richtung der Umgebung 9 vorgewölbt ist. Die Dichtmanschette 2 weist an ihrem freien Ende eine innenumfangseitig verlaufende Nut 11 auf, wobei die Dichtmanschette 2 als Abschluss eine vorgeschaltete Schmutzlippe 12 aufweist. Die Dichtmanschette 2 weist auf der der Welle 6 abgewandten Seite eine zusätzliche Profilierung 15 auf.

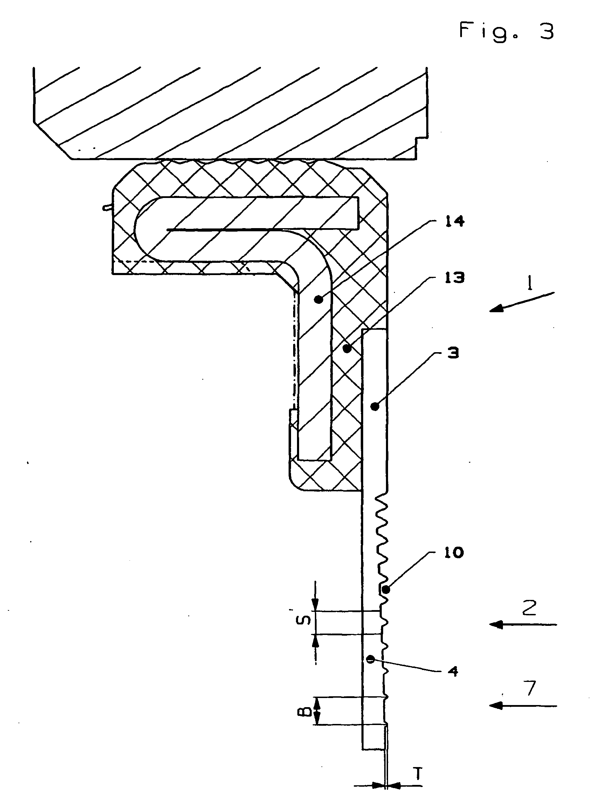

Figur 3 zeigt einen Dichtring gemäß Figur 1 mit einer Rückfördernut 10, deren Nuttiefe T sich vom abzudichtenden Raum 8, im Bereich des Elastomens 13 entlang des Dichtbereichs 4 in Richtung der Umgebung 9, dem freien Ende der Dichtmanschette 2, verringert. Die Nuttiefe der Rückfördereinrichtung 7, gebildet durch eine Rückfördernut 10 verringert sich in dieser Ausführung bei jedem Spiralgang um 0,03 mm. Die Querschnittsfläche der Rückfördernut 10 vergrößert sich trotzdem in Richtung zum freien Ende der Dichtmanschette 2. Die Vergrößerung der Querschnittsfläche erfolgt durch eine zunehmende Breite B und eine zunehmende Steigung S der Rückfördernut 10.

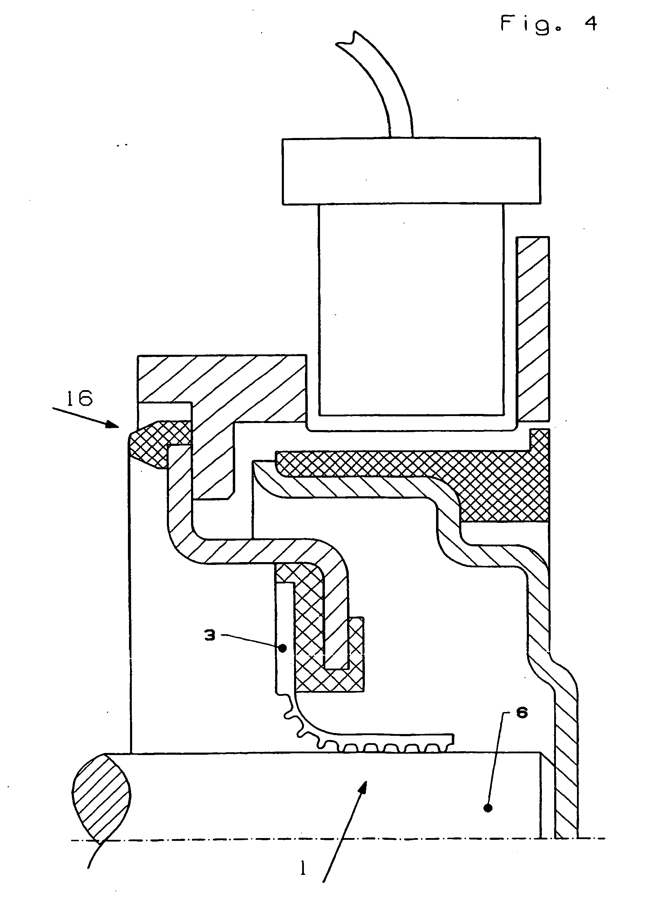

Figur 4, zeigt einen Gehäuseverschlussdeckel 16, in dem ein erfindungsgemäßer Dichtring 1 montiert ist. Der Gehäuseverschlussdeckel 16 bildet mit dem Dichtring 1 eine vormontierbare Einheit.

## Patentansprüche

1. Dichtring (1), umfassend eine Dichtmanschette (2) aus polymerem Werkstoff, die während der bestimmungsgemäßen Verwendung, im Längsschnitt betrachtet, im wesentlichen L-förmig ausgebildet ist, mit einem sich im wesentlichen in radialer Richtung erstreckenden Befestigungsbereich (3) und einem sich im wesentlichen in axialer Richtung erstreckenden Dichtbereich (4), der die Oberfläche (5) eines abzudichtenden Maschinenelements (6) mit radialer Vorspannung dichtend umschließt, wobei der Dichtbereich (4) auf der der Oberfläche (5) zugewandten Seite zumindest eine Rückfördereinrichtung (7) zur Förderung von abzudichtendem Medium in Richtung des abzudichtenden Raums (8) aufweist, wobei die Rückfördereinrichtung (7) durch zumindest eine sich in Richtung vom abzudichtenden Raum (8) zur Umgebung (9) spiralförmig erstreckende Rückfördernut (10) gebildet ist, **dadurch gekennzeichnet, dass** sich die Querschnittsfläche in Richtung der Umgebung (9) vergrößert.

2. Dichtring nach Anspruch 1, **dadurch gekennzeichnet, dass** sich die Breite (B) und/oder die Steigung (S) der Rückfördernut (10) bei zumindest einem Spiralgang vom abzudichtenden Raum (8) in Richtung der Umgebung (9) vergrößert.

3. Dichtring nach Anspruch 1 oder 2, **dadurch gekennzeichnet, dass** das Verhältnis von Querschnittsfläche der Rückfördernut (10) auf der dem abzudichtenden Raum (8) zugewandten Seite zur Querschnittsfläche auf der der Umgebung (9) zugewandten Seite von 1:1,5 bis 1:4, vorzugsweise 1:3 beträgt.

4. Dichtring nach einem der Ansprüche 1 bis 3, **dadurch gekennzeichnet, dass** das Verhältnis von Breite (B) und/oder Steigung (S) auf der dem abzudichtenden Raum (8) zugewandten Seite zu Breite (B) und/oder Steigung (S) an der der Umgebung (9) zugewandten Seite von 1:1,5 bis 1:2,5, vorzugsweise 1:2 beträgt.

5. Dichtring nach einem der Ansprüche 1 bis 4, **dadurch gekennzeichnet, dass** sich die Breite (B) und/oder die Steigung (S) der Rückfördernut (10) bei jedem Spiralgang von 0,02 mm bis 0,06 mm, vorzugsweise um 0,04 mm vergrößert.

6. Dichtring nach einem der Ansprüche 1 bis 5, **dadurch gekennzeichnet, dass** die Rückfördernut (10) eine sich vom abzudichtenden Raum (8) entlang des Dichtbereichs (4) in Richtung Umgebung (9) verringernde Nuttiefe (T) aufweist.

7. Dichtring nach Anspruch 6, **dadurch gekennzeichnet, dass** sich die Nuttiefe (T) bei jedem Spiralgang um mindestens 0,03 mm verringert.

8. Dichtring nach einem der Ansprüche 1 bis 7, **dadurch gekennzeichnet, dass** die Dichtmanschette (2) mit ihrem freien Ende in Richtung der Umgebung (9) vorgewölbt ist.

9. Dichtring nach einem der Ansprüche 1 bis 8, **dadurch gekennzeichnet, dass** an der Dichtmanschette auf der der Umgebung zugewandten Seite eine Schmutzlippe (12) angeordnet ist.

10. Dichtring nach einem der Ansprüche 1 bis 9, **dadurch gekennzeichnet, dass** die Rückfördernut (10) auf der der Umgebung (9) zugewandten Seite in eine konzentrisch innenumfangsseitig verlaufende Nut (11) oder Dichtleiste (17) ausläuft.

11. Dichtring nach einem der Ansprüche 1 bis 10, **dadurch gekennzeichnet, dass** die Dichtmanschette (2) aus einem PTFE-Compound besteht.

12. Gehäuseverschlussdeckel (16), umfassend einen Dichtring (1) nach einem der Ansprüche 1 bis 11, der in den Gehäuseverschlussdeckel (16) integriert ist.

## Claims

1. Sealing ring (1), comprising a sealing collar (2) which is made from polymeric material and, during correct use, is of substantially L-shaped design, as viewed in longitudinal section, with a fastening region (3) extending substantially in the radial direction, and with a sealing region (4) which extends substantially in the axial direction and, with radical prestress, sealingly surrounds the surface (5) of a machine element (6) to be sealed, wherein the sealing region (4), on the side facing the surface (5), has at least one return device (7) for conveying medium to be sealed in the direction of the space (8) to be sealed, wherein the return device (7) is formed by at least one return groove (10) which extends in a spiral manner in the direction from the space (8) to be sealed to the surroundings (9), **characterized in that** the cross-sectional area is increased in the direction of the surroundings (9).

2. Sealing ring according to Claim 1, **characterized in that** the width (B) and/or the pitch (S) of the return groove (10) increase/increases with at least one spiral turn from the space (8) to be sealed in the direction of the surroundings (9).

3. Sealing ring according to Claim 1 or 2, **characterized in that** the ratio of cross-sectional area of the return groove (10) on the side facing the space (8) to be sealed to the cross-sectional area on the side facing the surroundings (9) is 1:1.5 to 1:4, preferably 1:3.

4. Sealing ring according to one of Claims 1 to 3, **characterized in that** the ratio of width (B) and/or pitch (S) on the side facing the space (8) to be sealed to width (B) and/or pitch (S) on the side facing the surroundings (9) is from 1:1.5 to 1:2.5, preferably 1:2.

5. Sealing ring according to one of Claims 1 to 4, **characterized in that** the width (B) and/or the pitch (S) of the return groove (10) increase/increases from 0.02 mm to 0.06 mm, preferably by 0.04 mm with each spiral turn.

6. Sealing ring according to one of Claims 1 to 5, **characterized in that** the return groove (10) has a groove depth (T) which reduces in size from the space (8) to be sealed along the sealing region (4) in the direction of the surroundings (9).

7. Sealing ring according to Claim 6, **characterized in that** the groove depth (T) decreases in size by at least 0.03 mm with each spiral turn.

8. Sealing ring according to one of Claims 1 to 7, **characterized in that** the sealing collar (2) is precurved at its free end in the direction of the surroundings (9).

9. Sealing ring according to one of Claims 1 to 8, **characterized in that** a dirt lip (12) is arranged on that side of the sealing collar which faces the surroundings.

10. Sealing ring according to one of Claims 1 to 9, **characterized in that** the return groove (10) on the side facing the surroundings (9) peters out into a groove (11) or sealing strip (17) running concentrically on the inner circumference.

11. Sealing ring according to one of Claims 1 to 10, **characterized in that** the sealing collar (2) is composed of a PTFE compound.

12. Housing closure cover (16), comprising a sealing ring (1) according to one of Claims 1 to 11 which is integrated in the housing closure cover (16).

## Revendications

1. Bague d'étanchéité (1), comprenant une manchette d'étanchéité (2) en matériau polymère, qui, pendant l'utilisation conforme, considérée en coupe longitudinale, est réalisée essentiellement en forme de L, avec une zone de fixation (3) s'étendant essentiellement dans la direction radiale, et avec une zone d'étanchéité (4) s'étendant essentiellement dans la direction axiale, qui entoure de manière hermétique, avec une précontrainte radiale, la surface (5) d'un élément de machine (6) à étancher, la zone d'étanchéité (4) du côté tourné vers la surface (5) présentant au moins un dispositif de retour (7) pour refouler du fluide à étancher dans la direction de l'espace à étancher (8), le dispositif de retour (7) étant formé par au moins une rainure de retour (10) s'étendant en spirale dans la direction de l'espace à étancher (8) vers l'environnement extérieur (9), **caractérisée en ce que** la surface en section transversale augmente dans la direction de l'environnement extérieur (9).

2. Bague d'étanchéité selon la revendication 1, **caractérisée en ce que** la largeur (B) et/ou le pas (S) de la rainure de retour (10) augmente dans la direction de l'environnement extérieur (9) depuis l'espace à étancher (8) pour au moins un tour en spirale.

3. Bague d'étanchéité selon la revendication 1 ou 2, **caractérisée en ce que** le rapport de la surface en section transversale de la rainure de retour (10) du côté tourné vers l'espace à étancher (8) à la surface en section transversale du côté tourné vers l'environnement extérieur (9) est de 1:1,5 à 1:4, de préférence de 1:3.

4. Bague d'étanchéité selon l'une quelconque des revendications 1 à 3, **caractérisée en ce que** le rapport de la largeur (B) et/ou du pas (S) du côté tourné vers l'espace à étancher (8) à la largeur (B) et/ou au pas (S) du côté tourné vers l'environnement extérieur (9) est de 1:1,5 à 1:2,5, de préférence de 1:2.

5. Bague d'étanchéité selon l'une quelconque des revendications 1 à 4, **caractérisée en ce que** la largeur (B) et/ou le pas (S) de la rainure de retour (10) augmente pour chaque tour de spirale de 0,02 mm à 0,06 mm, de préférence de 0,04 mm.

6. Bague d'étanchéité selon l'une quelconque des revendications 1 à 5, **caractérisée en ce que** la rainure de retour (10) présente une profondeur de rainure (T) qui diminue depuis l'espace à étancher (8) le long de la zone d'étanchéité (4) dans la direction de l'environnement extérieur (9).

7. Bague d'étanchéité selon la revendication 6, **caractérisée en ce que** la profondeur de rainure (T) diminue pour chaque tour de spirale d'au moins 0,03 mm.

8. Bague d'étanchéité selon l'une quelconque des revendications 1 à 7, **caractérisée en ce que** la manchette d'étanchéité (2) est précintrée avec son extrémité libre dans la direction de l'environnement extérieur (9).

9. Bague d'étanchéité selon l'une quelconque des revendications 1 à 8, **caractérisée en ce qu'**une lèvre anti-poussière (12) est disposée sur la manchette d'étanchéité du côté tourné vers l'environnement extérieur.

10. Bague d'étanchéité selon l'une quelconque des revendications 1 à 9, **caractérisée en ce que** la rainure de retour (10) se termine du côté tourné vers l'environnement extérieur (9) par une rainure (11) ou une nervure d'étanchéité (17) s'étendant concentriquement du côté de la périphérie intérieure.

11. Bague d'étanchéité selon l'une quelconque des revendications 1 à 10, **caractérisée en ce que** la manchette d'étanchéité (2) se compose d'un composite en PTFE.

12. Couvercle de fermeture de boîtier (16), comprenant une bague d'étanchéité (1) selon l'une quelconque des revendications 1 à 11, qui est intégrée dans le couvercle de fermeture de boîtier (16).
